# EUROPEAN PATENT APPLICATION

(11) **EP 4 814 843 A1**
(43) Date of publication of application: **30.09.2026**
(21) Application number: 23959424.5
(22) Date of filing: 21.11.2023
(51) Int. Cl.: G06Q 20/06

(54) **METHOD AND SYSTEM FOR IMPLEMENTING ELECTRONIC CURRENCY INFRASTRUCTURE**

(71) Applicant: CONNECTFREE CORPORATION, Kyoto-shi, Kyoto 600-8009 (JP); Tate, Kristopher Andrew, Shimogyo-ku Kyoto-shi Kyoto 600-8009 (JP)
(72) Inventor: TATE, Kristopher Andrew, Kyoto-shi, Kyoto 600-8009 (JP)
(74) Representative: Boult Wade Tennant LLP
(86) International application number: PCT/JP2023/041796
(87) International publication number: WO 2025/109680

(57) **Abstract**

A method executed by a computer for attaining an electronic currency base includes a step of generating an electronic file to which a proprietary nature set in advance is imparted, a step of adding first signature data generated by using a private key of a central bank to the electronic file, a step of adding second signature data generated by using a private key of a first entity to the electronic file in order to transfer the electronic file to a second entity from the first entity after the first signature data is added, a step of recording at least a part of contents of the electronic file in a ledger, and a step of determining the presence or absence of an unauthorized transfer of the electronic file on the basis of at least the contents recorded in the ledger.

## Description

### TECHNICAL FIELD

The present disclosure relates to a method and a system for attaining an electronic currency base.

### BACKGROUND ART

Not only the transaction of real money but also a transaction using various virtual currencies are performed. As an example of such a virtual currency, a virtual currency referred to as bitcoin is known. For example, JP 5871347 B1 (Patent Document 1) discloses a configuration which provides a virtual currency that can be continuously rewarded to a miner without any limitation and has a small change in the value.

### CITATION LIST

### PATENT DOCUMENT

Patent Document 1: JP 5871347 B1

### SUMMARY OF THE INVENTION

### PROBLEM TO BE SOLVED BY THE INVENTION

The bitcoin is based on a network performing cryptographic proofs. Therefore, in the cryptographic proofs, a large amount of commitment is required, and a number of resources are consumed. In addition, the transaction of the virtual currency is expensive and slow, and it is not possible to directly transfer the virtual currency.

The disclosure provides an electronic currency base capable of attaining a safe circulation of currency without consuming a number of resources such as a network.

### MEANS FOR SOLVING PROBLEM

According to one embodiment of the disclosure, a method executed by a computer for attaining an electronic currency base is provided. The method includes a step of generating an electronic file to which a proprietary nature set in advance is imparted, a step of adding first signature data generated by using a private key of a central bank to the electronic file, a step of adding second signature data generated by using a private key of a first entity to the electronic file in order to transfer the electronic file to a second entity from the first entity after the first signature data is added, a step of recording at least a part of contents of the electronic file in a ledger, and a step of determining the presence or absence of an unauthorized transfer of the electronic file on the basis of at least the contents recorded in the ledger.

The step of determining the presence or absence of the unauthorized transfer of the electronic file may include a step of determining whether there is a record that the electronic file is transferred to each of a plurality of entities from the first entity in association with the electronic file.

The method may further include a step of deleting the electronic file in which the first entity is stored when receiving the electronic file to which third signature data generated by using a private key of the second entity is added from the second entity after the electronic file is transmitted to the second entity from the first entity.

The method may further include a step of the second entity validating the second signature data included in the electronic file by using the public key of the first entity.

The electronic file may include setting of an expiration date. The method may further include a step of at least one of the first entity and the second entity validating that the expiration date of the electronic file is not expired before the electronic file is transferred to the second entity from the first entity.

The method may further include a step of comparing the contents of the electronic file with the contents recorded in the ledger, which is executed after the second entity receives the electronic file from the first entity.

The method may further include a step of the central bank collecting the electronic file when the expiration date of the electronic file is expired.

According to another embodiment of the disclosure, a system for attaining an electronic currency base is provided. The system includes a means for generating an electronic file to which a proprietary nature set in advance is imparted, a means for adding first signature data generated by using a private key of a central bank to the electronic file, a means for adding second signature data generated by using a private key of a first entity to the electronic file in order to transfer the electronic file to a second entity from the first entity after the first signature data is added, a ledger for recording at least a part of contents of the electronic file, and a means determining the presence or absence of an unauthorized transfer of the electronic file on the basis of at least the contents recorded in the ledger.

### EFFECT OF THE INVENTION

According to the disclosure, it is possible to attain a safe circulation of currency without consuming a number of resources such as a network.

### BRIEF DESCRIPTION OF DRAWINGS

Fig. 1 is a schematic view illustrating a configuration example of an electronic currency base according to this embodiment;
Fig. 2 is a schematic view illustrating a hardware configuration example of an information processing device used in the electronic currency base according to this embodiment;
Fig. 3 is a schematic view illustrating a hardware configuration example of a mobile device used in the electronic currency base according to this embodiment;
Fig. 4 is a diagram illustrating an example of a circulation of an electronic currency in the electronic currency base according to this embodiment;
Fig. 5 is a schematic view illustrating an example of a data structure of the electronic currency according to this embodiment;
Fig. 6 is a schematic view illustrating an example of a trust chain in the electronic currency base according to this embodiment;
Fig. 7 is a schematic view illustrating an example of a data structure of a trust control section (a trust authorization section) of the electronic currency according to this embodiment;
Fig. 8 is a schematic view illustrating an example of a data structure of transaction data in a transaction control section of the electronic currency according to this embodiment;
Fig. 9 is a schematic view illustrating an example of a data structure of checkpoint data in a special section of the electronic currency according to this embodiment;
Fig. 10 is a schematic view illustrating an example of a data structure of a ledger in the electronic currency base according to this embodiment;
Fig. 11 is a diagram for illustrating a basic processing procedure example of a transfer of the electronic currency between entities in the electronic currency base according to this embodiment;
Fig. 12 is a diagram for illustrating basic processing procedure example of the transfer of the electronic currency including planning in the electronic currency base according to this embodiment;
Fig. 13 is a sequence diagram illustrating a processing procedure of a circulation of the electronic currency in the electronic currency base according to this embodiment;
Fig. 14 is a sequence diagram illustrating another processing procedure of the circulation of the electronic currency in the electronic currency base according to this embodiment;
Fig. 15 is a flowchart illustrating an example of a processing procedure in the ledger of the electronic currency base according to this embodiment; and
Fig. 16 is a diagram for illustrating an example of compliance validation in the ledger of the electronic currency base according to this embodiment.

### MODE(S) FOR CARRYING OUT THE INVENTION

An embodiment according to the disclosure will be described in detail with reference to the drawings. Note that, the same reference numerals will be applied to the same or corresponding parts in the drawings, and the description thereof will not be repeated.

### <A. Terms>

In this specification, a "currency" includes not only a currency of which mandatory circulation is recognized by the state, but also electronic money having a value similar to a legal currency. In addition, the "currency" may include a proprietary nature referred to as a virtual currency or a cryptocurrency.

### <B. Outline>

The disclosure includes a method executed by a computer and a system for attaining an electronic currency base. First, the outline of an electronic currency base 1 according to this embodiment will be described. In the electronic currency base 1, an electronic currency 10 having the same proprietary nature as that of a physical currency such as a bill and a coin is circulated. The electronic currency 10 can also be referred to as a digital currency. Each of the electronic currencies 10 may be one electronic file.

In the electronic currency base 1, the electronic currency 10 is the unit of a currency recognized by a central bank, and has authenticity and circulation trustworthiness, which are secured by an electronic signature. The proprietary nature to be imparted to each of the electronic currencies 10, as with the physical currency, may be any one of values set in advance, or there may be more types of values than the physical currency.

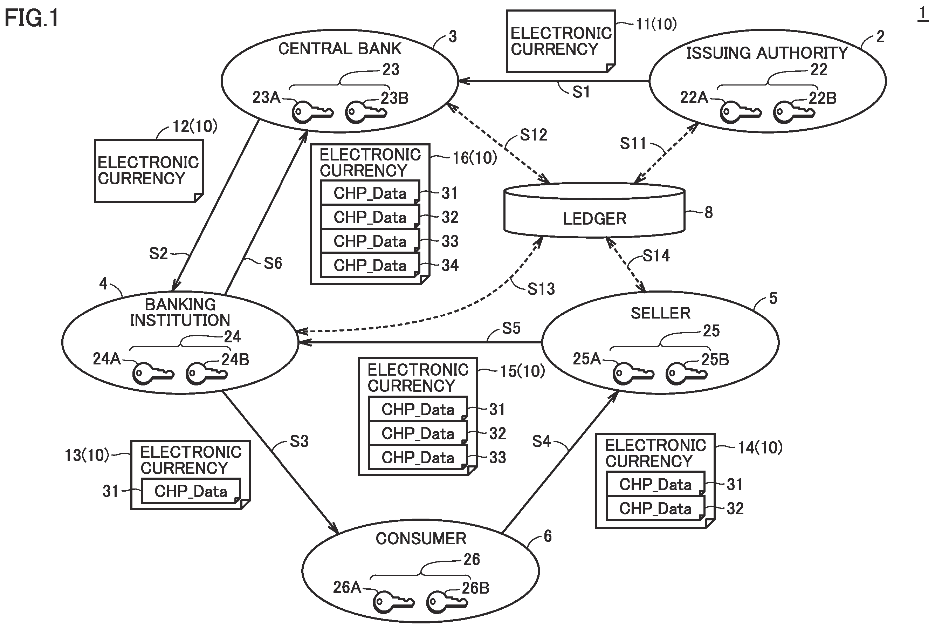

Fig. 1 is a schematic view illustrating a configuration example of the electronic currency base 1 according to this embodiment. With reference to Fig. 1, the electronic currency base 1, for example, includes one or a plurality of issuing authorities 2, a central bank 3, one or a plurality of banking institutions 4, one or a plurality of sellers 5, and one or a plurality of consumers 6. In the electronic currency base 1, the central bank 3 is an entity (a subject) securing the authenticity of the electronic currency 10.

The issuing authority 2 is an institution issuing the electronic currency 10. The issuing authority 2 corresponds to an issuer of the electronic currency trusted by the central bank 3. The issuing authority 2 includes a key pair 22 including a private key 22A and a public key 22B. The issuing authority 2 generates the electronic file that is the substance of the electronic currency 10 in accordance with a condition set in advance or in accordance with an instruction from the central bank 3 or the like.

The proprietary nature set in advance is imparted to the generated electronic file. The generated electronic file (an electronic currency 11) may include initial data as described below. The generated electronic currency 11 is transferred to the central bank 3 from the issuing authority 2 (step S1). The issuing authority 2 corresponds to the printing office or the minting authority in contrast with a base where the physical currency is circulated.

The central bank 3 performs the provision of the electronic currency 10 to a financial market, the collection of the electronic currency 10 from the financial market, the management of the total amount of the electronic currency 10 circulated in the financial market, and the like. The central bank 3 may be the Federal Reserve Bank. The central bank 3 includes a key pair 23 including a private key 23A and a public key 23B. Signature data generated by using the public key 23B of the central bank 3 is added to the electronic currency 11 before the electronic currency 11 is provided to the financial market (an electronic currency 12). The electronic currency 12, for example, is provided to the financial market through one or a plurality of banking institutions 4 (step S2).

As described above, (a computer of) the central bank 3 adds signature data (first signature data) generated by using the private key 23A of the central bank 3 to the electronic currency 10 (the electronic file).

In the configuration example illustrated in Fig. 1, the issuing authority 2 generates the electronic currency 10 (the electronic file) to which the proprietary nature set in advance is imparted. The electronic currency 10 (the electronic file) may be generated by (the computer of) the central bank 3, or (a computer of) another institution delegated by the central bank 3 without being limited to (the computer of) the issuing authority 2.

The banking institution 4 performs the provision of the electronic currency 10 to a seller 5 and a consumer 6, the collection of the electronic currency 10 from the seller 5 and the consumer 6, various payments with respect to the seller 5 and the consumer 6, and the like. The banking institution 4 includes a key pair 24 including a private key 24A and a public key 24B.

For example, in a case where the consumer 6 requests the banking institution 4 for the withdrawal of the designated amount of money from the own bank account, the banking institution 4 provides an electronic currency 13 having the proprietary nature of the designated amount of money to the consumer 6 (step S3). The banking institution 4 includes the key pair 24 including the private key 24A and the public key 24B. The banking institution 4, in addition to transaction data described below, adds information for proving the transfer of the electronic currency 10 (hereinafter, also referred to as "checkpoint data") to the electronic currency 12 (checkpoint data 31). As described below, the checkpoint data 31 includes signature data generated by using the private key 24A of the banking institution **4.**

The checkpoint data included in the electronic currency 10 is an evidence for completely ensuring the previous circulation route of the electronic currency 10. Therefore, signature data of the entity that handles the electronic currency 10 is added to the checkpoint data. The signature data included in the checkpoint data 31 secures non-repudiation with respect to the transfer of the electronic currency 10.

The electronic currency 13 to which the checkpoint data 31 is added is provided to the consumer **6.** When the consumer 6 withdraws the designated amount of money from the own bank account, an automatic teller machine (ATM) or the like may be used, or a computer of the banking institution 4 and a computer of the consumer 6 may receive the electronic currency 10 through a network.

The consumer 6 provides the electronic currency 13 provided from the banking institution 4 to the seller 5 as a compensation for purchasing a product and a service. For example, the consumer 6 notifies the seller 5 of the amount of money of a compensation for a product or a service that the seller 5 desires to purchase. In a case where the notified amount of money is accepted, the consumer 6 adds the checkpoint data 32 to the electronic currency 13 having the proprietary nature of the accepted amount of money, in addition to the transaction data.

An electronic currency 14 to which the checkpoint data 32 is added is transferred to the seller 5 from the consumer 6 (step S4). The checkpoint data 32 includes signature data generated by using a private key 26A of the consumer 6.

The proprietary nature of the electronic currency 10 may be determined when issued from the issuing authority 2. Therefore, the consumer 6 is not limited to possessing the electronic currency 10 with the same proprietary nature as the compensation. In such a case, as with payment with the physical currency, the consumer 6 may transmit a plurality of electronic currencies 10 to the seller 5 in a single transaction to be the amount of money for a required consideration. Alternatively, the seller 5 may transmit the electronic currency 10 corresponding to "change" to the consumer 6.

The seller 5 includes the key pair 24 including a private key 25A and a public key 25B. The seller 5 is capable of cashing the electronic currency 10 that the seller possesses at any timing, or crediting the own bank account with the proprietary nature of the electronic currency 10 that the seller possesses. For example, in a case where the banking institution 4 accepts the cashing or the credit, the seller 5 adds the checkpoint data 33 to the electronic currency 14, in addition to the transaction data.

An electronic currency 15 to which the checkpoint data 33 is added is transferred to the banking institution 4 from the seller 5 (step S5). The checkpoint data 33 includes signature data generated by using the private key 25A of the seller 5.

The banking institution 4 provides a physical currency corresponding to the proprietary nature of the received electronic currency 15 to the seller 5, or adds the proprietary nature of the received electronic currency 15 to the balance of the bank account of the seller 5.

Similarly, the consumer 6 is also capable of cashing the electronic currency 10 that the consumer possesses, of crediting the bank account with the proprietary nature of the electronic currency 10 that the consumer possesses.

As described above, each of (the computer of) the banking institution 4, (the computer of) the seller 5, and (the computer of) the consumer 6 adds signature data (second signature data) generated by using the own private key to the electronic file in order to transfer the electronic currency 10 to the other entity from the own entity after the central bank 3 adds the signature data (the first signature data) generated by using the private key 23A of the central bank 3 to the electronic currency 10.

In the electronic currency base 1, an expiration date (an effective date and time) is set in the electronic currency 10. In a case where the expiration date set in the electronic currency 10 is expired (in a case where the set effective date and time has come), the electronic currency 10 is not capable of being circulated in the financial market since then. The electronic currency 10 of which the expiration date is expired is returned to the central bank 3. The central bank 3 (or the issuing authority 2) newly issues the electronic currency 10. The expiration date may be arbitrarily determined on the basis of the circulation policy of the electronic currency 10 by the central bank 3, or the like. For example, the length of the expiration date may be set to approximately 6 months from the issue of the electronic currency 10.

The electronic currency 10 provided to the financial market by the central bank 3 is circulated between the banking institution 4, the seller 5, the consumer 6, and the like until a predetermined condition is satisfied. The predetermined condition, for example, includes a case where the expiration date of the electronic currency 10 is expired, a case where a region for recording the checkpoint data of the electronic currency 10 is not sufficient, and the like.

In a case where the electronic currency 10 is not capable of being circulated in the financial market, the central bank 3 collects the electronic currency 10. As described above, in a case where the expiration date of the electronic currency 10 is expired, the central bank 3 collects the electronic currency 10.

The banking institution 4 is capable of crediting the own bank account in the central bank 3 with the proprietary nature of the electronic currency 10 that the banking institution possesses at any timing. For example, in a case where the central bank 3 accepts the credit, the banking institution 4 adds the checkpoint data 34 to the electronic currency 15. The checkpoint data 34 includes signature data generated by the private key 24A of the banking institution 4.

An electronic currency 16 including the checkpoint data 34 is transferred to the central bank 3 from the banking institution 4 (step S6). The central bank 3 adds the proprietary nature of the received electronic currency 16 to the balance of the bank account of the banking institution 4.

For convenience of description, an example has been described in which the transfer of the electronic currency 10 to the consumer 6 from the banking institution 4, the transfer of the electronic currency 10 to the seller 5 from the consumer 6, and the transfer of the electronic currency 10 to the banking institution 4 from the seller 5 are sequentially executed, but in general, the transaction is repeated between the seller 5 and the consumer 6 through the electronic currency 10. Therefore, the electronic currency 10 is transferred between one or a plurality of sellers 5 and one or a plurality of consumers 6 a plurality of times.

In addition, the banking institution 4 does not transfer the electronic currency 10 received from the seller 5 or the consumer 6 to the central bank 3, but may provide again the electronic currency to the seller 5 or the consumer 6 in accordance with a request.

The electronic currency base 1 includes a ledger **8.** The ledger 8 stores history information relevant to the transaction or the transfer of the electronic currency 10. In the configuration example illustrated in **Fig. 1****,** the ledger 8 is accessible from one or a plurality of issuing authorities **2,** the central bank **3,** one or a plurality of banking institutions **4,** and one or a plurality of sellers 5 through a network. The ledger 8 may be managed by the issuing authority 2 and/or the central bank **3.**

In **Fig. 1****,** one ledger 8 is illustrated, but a distributed ledger including a plurality of servers may be adopted. In addition, the ledger 8 to be a master may be prepared, and one or a plurality of ledgers 8 to be a clone or a slave may be prepared.

In a case where the electronic currency 10 is received from the other entity or in a case where the electronic currency 10 is provided to the other entity, each of one or a plurality of issuing authorities **2,** the central bank **3,** one or a plurality of banking institutions **4,** and one or a plurality of sellers 5 stores information indicating the contents of the transaction in the ledger **8.** The ledger 8 records at least a part of the contents of the electronic currency 10 (the electronic file). Note that, all the sellers 5 may not be accessible to the ledger 8 through a network.

For simplification of description, in Fig. 1, in the transfer of the electronic currency 10 to the central bank 3 from the issuing authority 2 and the transfer of the electronic currency 10 to the banking institution 4 from the central bank 3, the checkpoint data is not added to the electronic currency 10, but in a case where the electronic currency 10 is transferred between the entities, the checkpoint data may be necessarily added to the electronic currency 10.

At least a part of the entities of the electronic currency base 1 is capable of determining the presence or absence of an unauthorized transfer of the electronic currency 10 (the electronic file) on the basis of at least the contents recorded in the ledger 8. Unlike the virtual currency, by referring to the ledger 8 at any timing, it is possible to determine the presence or absence of the unauthorized transfer of the electronic currency 10, and thus, a number of resources such as a network are not consumed. On the other hand, since the unauthorized transfer of the electronic currency 10 can be reliably detected, a safe circulation of currency can be attained.

### <C. Hardware Configuration Example>

Next, a configuration example of hardware used in the electronic currency base 1 according to this embodiment will be described.

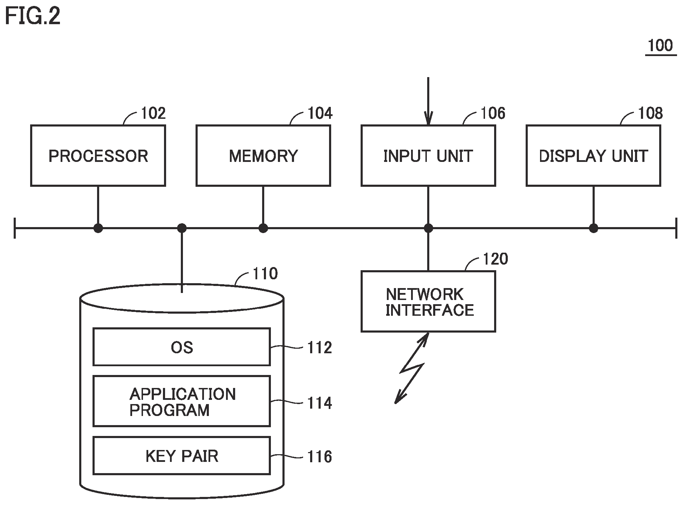

Fig. 2 is a schematic view illustrating a hardware configuration example of an information processing device 100 used in the electronic currency base 1 according to this embodiment. The information processing device 100 illustrated in Fig. 2, for example, is used to execute information processing in each of the issuing authority 2, the central bank 3, the banking institution 4, the seller 5, the ledger 8, and the like.

With reference to Fig. 2, the information processing device 100 is according to a known computer architecture, and includes one or a plurality of processors 102, a memory 104, an input unit 106, a display unit 108, a storage 110, and a network interface 120.

The processor 102 sequentially reads out and executes computer-readable instructions. The processor 102, for example, includes a central processing unit (CPU) and the like. The processor 102 may include a plurality of cores.

In this specification, the term "processor" includes at least a CPU, a graphics processing unit (GPU), an application specific integrated circuit (ASIC), and a field-programmable gate array (FPGA). Further, in this specification, the term "processor" also includes a system on chip (SoC). The "processor" can also be translated as a processing circuitry.

The memory 104, for example, is a volatile storage device such as a dynamic random access memory (DRAM) or a static random access memory (SRAM). The storage 110, for example, is a non-volatile storage device such as a hard disk drive (HDD) or a solid state drive (SSD) .

In this specification, the term "memory" includes a memory and a storage. In the storage 110, various programs and various data pieces are stored. The processor 102 reads out a designated part or a computer-readable instruction from the program stored in the storage 110, and decompresses and sequentially executes the designated part or the computer-readable instruction on the memory 104, and thus, attains various processing pieces as described below.

In the storage 110, for example, an OS 112, an application program 114, and a key pair 116 are stored. The OS 112 is a program for providing an environment for executing various processing pieces in the information processing device 100. The application program 114 includes a computer-readable instruction for executing processing required for the electronic currency base 1 according to this embodiment. The key pair 116 may be stored in a secure region of the storage 110, or may be stored in a secure device (not illustrated) different from that of the storage 110.

The input unit 106 receives a user manipulation with respect to the information processing device 100, and the like. The input unit 106, for example, may be a keyboard, a mouse, a touch panel disposed in association with the display unit 108, a switch disposed in any position of the housing of the information processing device 100, and the like. The input unit 106 may include an interface for communicating with an input device.

The display unit 108 visualizes a processing result by the processor 102, and the like. The display unit 108, for example, may be a liquid crystal display (LCD), an organic electro-luminescence (EL) display, or the like. The display unit 108 may include an interface for communicating with a display device.

The network interface 120 mediates communication with the other device. The network interface 120, for example, may be an Ethernet (Registered Trademark) port, a universal serial bus (USB) port, a serial port such as IEEE1394, a parallel port such as legacy, and the like. The network interface 120 may include a processing circuitry, an antenna, and the like for wireless communication.

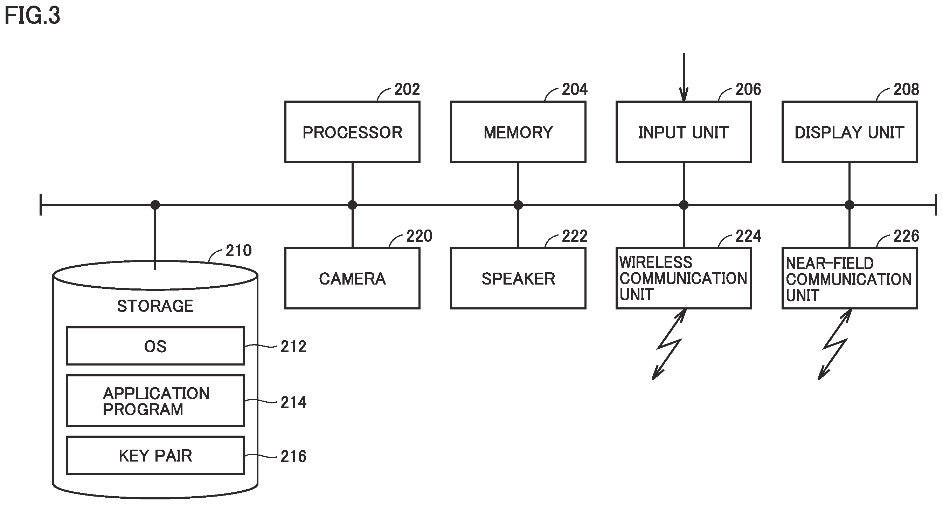

Fig. 3 is a schematic view illustrating a hardware configuration example of a mobile device 200 used in the electronic currency base 1 according to this embodiment. The mobile device 200 illustrated in Fig. 3, for example, is used to execute information processing in each of the seller 5, the consumer 6, and the like.

With reference to Fig. 3, the mobile device 200 is according to a known computer architecture, and includes one or a plurality of processors 202, a memory 204, an input unit 206, a display unit 208, a storage 210, a camera 220, a speaker 222, a wireless communication unit 224, and a near-field communication unit 226.

The processor 202, the memory 204, the input unit 206, the display unit 208, and the storage 210 are the same as the processor 102, the memory 204, the input unit 206, the display unit 208, and the storage 210 illustrated in Fig. 2, respectively, and thus, the detailed description will not be repeated.

In the storage 210, for example, an OS 212, an application program 214, and a key pair 216 are stored.

The camera 220 is provided in the housing of the mobile device 200, and images a still image and a moving image.

The speaker 222 is provided in the housing of the mobile device 200, and generates a voice in accordance with an instruction from the processor 202.

The wireless communication unit 224 mediates communication with the other information processing device or the like through a public line or the like. The wireless communication unit 224, for example, may be 5G, 4G, LTE, 3G, or the like.

The near-field communication unit 226 mediates communication with the other mobile device or the like existing in the vicinity of the mobile device 200. The near-field communication unit 226, for example, may be an interface according to a communication standard such as a wireless LAN, Bluetooth (Registered Trademark), and ZigBee (Registered Trademark).

The information processing device 100 and/or the mobile device 200 may further include a component for reading out a computer-readable instruction and/or data from non-transitory media in which the computer-readable instruction and/or the data are stored. The media, for example, may be optical media such as a digital versatile disc (DVD), semiconductor media such as a USB memory, and the like. The information processing device 100 and/or the mobile device 200 may acquire necessary computer-readable instruction and/or data from a distribution server on a network.

Note that, processing required for the electronic currency base 1 can be attained by using any computing resource. The computing resource is not limited to the hardware configuration example illustrated in Fig. 2 and Fig. 3, and any hardware can be used.

In the following description, the term "entity" includes any individual or corporation relevant to the electronic currency base 1 (including the issuing authority 2, the central bank 3, the banking institution 4, the seller 5, and the consumer 6) capable of indicating the intention, and a computer (including the information processing device 100 and/or the mobile device 200) used by the individual or the corporation. That is, each of the entities includes a concept in which any individual or corporation capable of indicating the intention is integrated with the computer used by the individual or the corporation.

Further, the term "entity" may include a computer of which the intention is determined by artificial intelligence (AI).

Many of processing pieces described below are started and executed in accordance with the intention determined by the individual, the corporation, or AI. Here, the processing itself that handles the electronic currency 10 is attained by the computer.

### <D. Example of Circulation of Electronic Currency>

Next, an example of the circulation of the electronic currency 10 in the electronic currency base 1 according to this embodiment will be described.

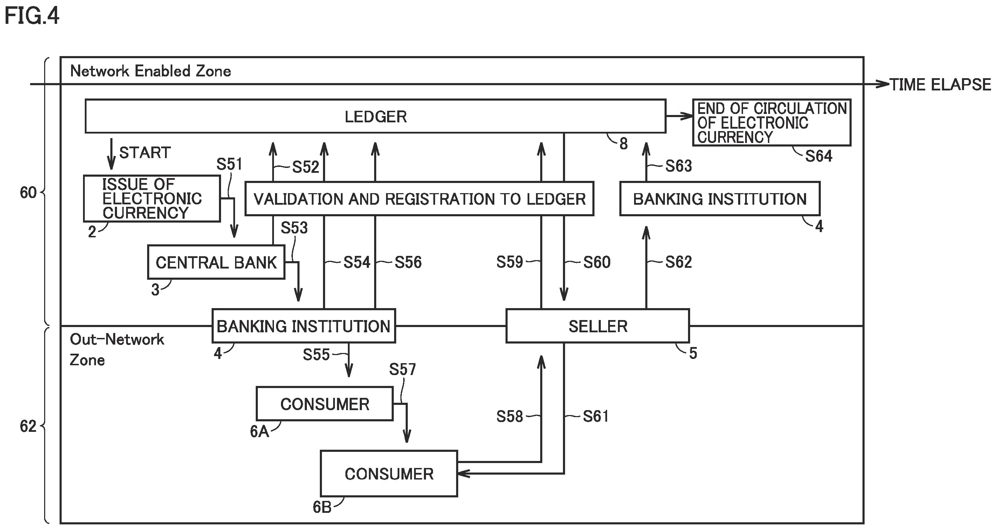

Fig. 4 is a diagram for illustrating an example of the circulation of the electronic currency 10 in the electronic currency base 1 according to this embodiment. In Fig. 4, a range that is accessible to the ledger 8 through a network is referred to as a network enabled zone 60, and a region that is not accessible to the ledger 8 through a network is referred to as an out-network zone 62.

An entity existing in the network enabled zone 60 is capable of recording the contents of the electronic currency 10 in the ledger 8, and referring to the contents of the electronic currency recorded in the ledger 8. Therefore, in accordance with the circulation of the electronic currency 10, history including the checkpoint data is added to the electronic currency 10 itself, and the contents of the checkpoint data of the electronic currency 10 are also sequentially reflected on the ledger 8.

On the other hand, an entity existing in the out-network zone 62 is not capable of accessing the ledger 8 through a network, and thus, the circulation of the electronic currency 10 is based on trust estimated with the other user or an entity retained by the other user. Therefore, the history including the checkpoint data of the electronic currency 10 is added only to the electronic currency 10 itself. However, the contents of the electronic currency 10 can be reflected on the ledger 8 at any timing.

The checkpoint data of the electronic currency 10 includes signature data for securing non-repudiation with respect to an action (the transfer of the electronic currency 10) by an entity that possesses the electronic currency 10.

With reference to Fig. 4, first, the issuing authority 2 issues the electronic currency 10 (step S51). Specifically, the issuing authority 2 generates information required as the electronic currency 10, and generates the electronic file including the generated information. The issuing authority 2 generates the electronic currency 10 (the electronic file) to which the proprietary nature set in advance is imparted.

In a case where the electronic currency 10 issued from the issuing authority 2 is received, the central bank 3 adds the record of the received electronic currency 10 in the ledger 8 (step S52). As described above, the central bank 3 records at least a part of the contents of the electronic currency 10 in the ledger 8. The added record includes identification information for specifying the electronic currency 10. The identification information of the electronic currency 10 may be used as a file name of the electronic currency 10.

The central bank 3 provides the electronic currency 10 to the financial market. Specifically, the central bank 3 adds the signature data generated by using the private key 23A of the central bank 3 to the electronic currency 10 (step S53). As described above, the central bank 3 adds the signature data generated by using the private key 23A of the central bank 3 to the electronic currency 10 (the electronic file).

In a case where the electronic currency 10 is received from the central bank **3,** the banking institution 4 reflects the information of the received electronic currency 10 on the ledger 8 (step S54). As described above, the banking institution 4 records at least a part of the contents of the electronic currency 10 in the ledger 8.

In accordance with a demand from a consumer 6A who is a depositor of the banking institution **4,** the banking institution 4 pays the designated amount of the electronic currency 10 to the consumer 6A from a deposit of the consumer **6A.** Specifically, the banking institution 4 adds the signature data generated by using the private key 24A of the banking institution 4 to the electronic currency 10, and then, transfers the electronic currency 10 to the consumer 6A (step S55). As described above, the banking institution 4 adds the signature data generated by using the private key 24A of the banking institution 4 to the electronic currency 10 in order to transfer the electronic currency 10 to the consumer 6A (a second entity) from the banking institution 4 (a first entity).

In addition, the banking institution 4 reflects the information of the electronic currency 10 transferred to the consumer 6A on the ledger 8 (step S56). As described above, the banking institution 4 records at least a part of the contents of the electronic currency 10 in the ledger 8.

Subsequently, a case will be assumed in which the consumer 6A transfers the electronic currency 10 to a consumer 6B. In this case, the consumer 6A adds signature data generated by using a private key 26AA of the consumer 6A to the electronic currency 10, and then, transfers the electronic currency 10 to the consumer 6B (step S57). As described above, the consumer 6A adds the signature data generated by using the private key 26AA of the consumer 6A to the electronic currency 10 in order to transfer the electronic currency 10 to the consumer 6B (the second entity) from the consumer 6A (the first entity). Note that, in this case, the transfer of the electronic currency 10 is based on trust between the consumer 6A and the consumer 6B.

Subsequently, a case will be assumed in which the consumer 6B pays the electronic currency 10 received from the consumer 6A to the seller 5 as a compensation for purchasing a product and a service. Note that, it is assumed that the seller 5 exists in the network enabled zone 60. In this case, the consumer 6B offers a payment in the electronic currency 10 to the seller 5. Specifically, the consumer 6B adds the checkpoint data, and then, transmits the electronic currency 10 to be paid to the seller 5 (step S58).

The seller 5 reflects the contents of the electronic currency 10 offered by the consumer 6B on the ledger 8 (step S59). As described above, the seller 5 records at least a part of the contents of the electronic currency 10 in the ledger 8.

The seller 5 acquires a reflection result of the information with respect to the ledger 8 (step S60). As described above, the seller 5 (the second entity) receives the electronic currency 10 (the electronic file) from the consumer 6B (the first entity), and then, compares the contents of the electronic currency 10 with the contents recorded in the ledger 8. In this case, when the contents of the electronic currency 10 recorded in the ledger 8 do not comply with the contents of the electronic currency 10 offered by the consumer 6B, the seller 5 may reject the offer of the consumer 6B. That is, the seller 5 determines the presence or absence of the unauthorized transfer of the electronic currency 10 on the basis of at least the contents recorded in the ledger 8.

In a case where there is no problem in the compliance with the information recorded in the ledger 8, the seller 5 responds to the consumer 6B that the offer of the consumer 6B is accepted (step S61). The consumer 6B deletes the electronic currency 10 retained by the consumer 6B. As described above, the consumer 6B adds signature data generated by using a private key 26AB of the consumer 6B to the electronic currency 10 in order to transfer the electronic currency 10 to the seller 5 (the second entity) from the consumer 6B (the first entity). The electronic currency 10 is transferred to the seller 5 from the consumer 6B, and thus, the payment in the electronic currency 10 is completed.

After that, the seller 5 credits the bank account of the seller 5 in the banking institution 4 with the electronic currency 10 received from the consumer 6B or the like. Specifically, the seller 5 adds the signature data generated by using the private key 25A of the seller 5 to the electronic currency 10, and then, transfers the electronic currency 10 to the banking institution 4 (step S62). The banking institution 4 updates the balance of the bank account of the seller 5 in accordance with the amount of the electronic currency 10 received from the seller 5.

Note that, even in the case of exchanging the electronic currency 10 to cash, the seller 5 executes the same processing. In the case of the exchange, the banking institution 4 transfers cash corresponding to the amount of the electronic currency 10 received from the seller 5 to the seller 5.

The banking institution 4 is also capable of using again the electronic currency 10 received from the seller 5 for the payment to the consumer 6 and/or the seller 5.

After that, the banking institution 4 returns the electronic currency 10 received from the seller 5 to the central bank 3. Specifically, the banking institution 4 adds the signature data generated by using the private key 24A of the banking institution 4 to the electronic currency 10, and then, transfers the electronic currency 10 to the central bank 3 (step S63). The central bank 3 updates the balance of the bank account of the banking institution 4 in the central bank 3 in accordance with the number of electronic currencies 10 received from the banking institution 4. Alternatively, the central bank 3 may transfer a new electronic currency 10 to the banking institution 4 in accordance with the number of electronic currencies 10 received from the banking institution 4.

Finally, in a case where a predetermined condition is established, the central bank 3 discards the electronic currency 10 collected from the banking institution 4 (step S64). Discarding the electronic currency 10 may be deleting the electronic file itself, or may be managing the electronic currency 10 not to be circulated again.

### <E. Data Structure>

Next, an example of the file format of the electronic currency 10 (the electronic file) will be described. The electronic currency 10 may be retained in a binary format.

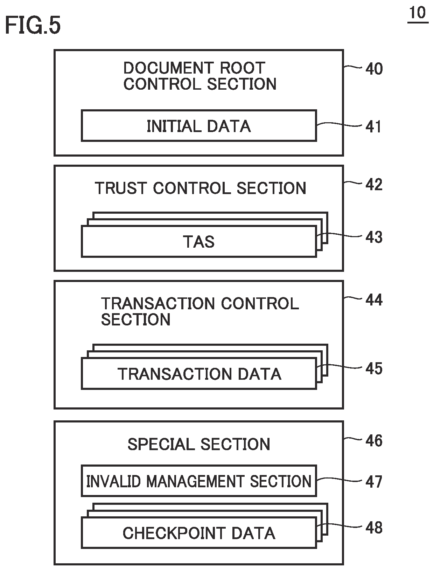

Fig. 5 is a schematic view illustrating an example of the data structure of the electronic currency 10 according to this embodiment. With reference to Fig. 5, the electronic currency 10, for example, may include the following sections.
(1) a document root control section 40
(2) a trust control section 42
(3) a transaction control section 44
(4) a special section 46

The data of each of the sections may include a section type indicating the type of section, a section flag indicating the state of the section, and a section length indicating the length of the section, as header information.

### (e1: Document Root Control Section 40)

The document root control section 40 of the electronic currency 10 generated by the issuing authority 2 may include initial data 41 including the following setting.
(a) a creation time (for example, a TAI64N format)
(b) an expiration date (spent at time) (for example, a TAI64N format)
(c) a currency code (for example, 3 bytes according to ISO4217 such as USD or JPY)
(d) a currency unit (a currency denomination) (for example, a non-zero unsigned integer)
(e) a consecutive identifier (a sequential identifier) (for example, 13 bytes)
(f) a decimal point position (decimal place) (a digit number indicating a decimal point position or a subunit indicator position: for example, 2 is set for USD, and 0 is set for JPY)
(g) the public key of the issuing authority 2
(h) the signature data for the central bank 3 to approve the public key of the issuing authority 2 (random nonce may be added)
(i) a hash value of a key string of the electronic currency 10 (for example, a hash string calculated from a specific keyword)
(j) a serial number of the electronic currency 10 (for example, hash value of the initial data of (1) to (9))

### (e2: Trust Control Section 42)

The trust control section 42 includes a trust authorization section (TAS) 43. The trust authorization section 43 may be metadata, or may store information for linking the public key to the central bank 3 (the root of the electronic currency 10).

In the electronic currency base 1 according to this embodiment, a complete trust chain of the electronic currency 10 is formed by using a digital signature including the banking institution 4, the seller 5, and the consumer 6, in which the currency provided to the financial market by the central bank 3 is used. The formed trust chain includes an entity that is involved in the circulation of the electronic currency 10.

The completeness (the integrity) of a signer may be supported by the signature of an intermediate institution (for example, the local issuing authority, the State Department, the Finance Ministry, a notary, and the like) extending trust with respect to the central bank 3.

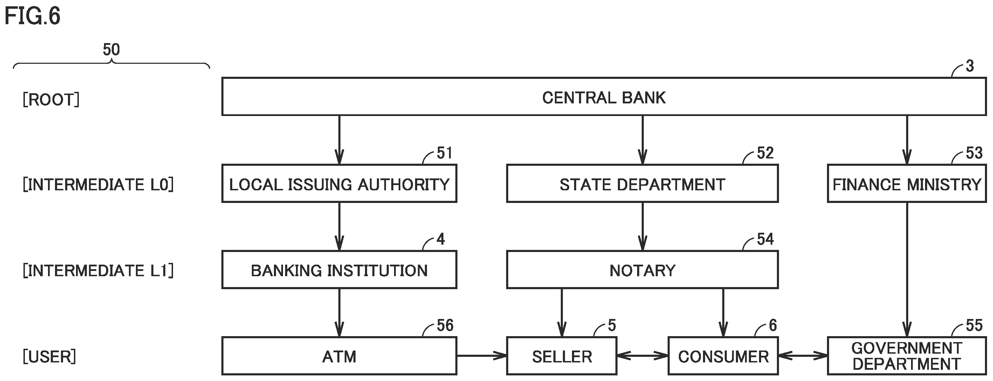

Fig. 6 is a schematic view illustrating an example of the trust chain in the electronic currency base 1 according to this embodiment. With reference to Fig. 6, a first intermediate entity (INTERMEDIATE L0) is linked to the central bank 3 that functions as a root (ROOT). The first intermediate entity, for example, may include a local issuing authority 51, a State Department 52, and a Finance Ministry 53. A second intermediate entity (INTERMEDIATE L1) is linked to the first intermediate entity. The second intermediate entity, for example, may include the banking institution 4 and a notary 54. A user is linked to the second intermediate entity. The user may include an ATM 56, the seller 5, the consumer 6, and a government department 55.

The completeness of a link configuring the trust chain indicating the circulation of the electronic currency 10 is ensured by the signature data stored in the trust authorization section 43. The link configuring the trust chain is defined in the electronic currency 10. The link configuring the trust chain is sequentially updated or added in accordance with the sequential transfer of the electronic currency 10, as necessary.

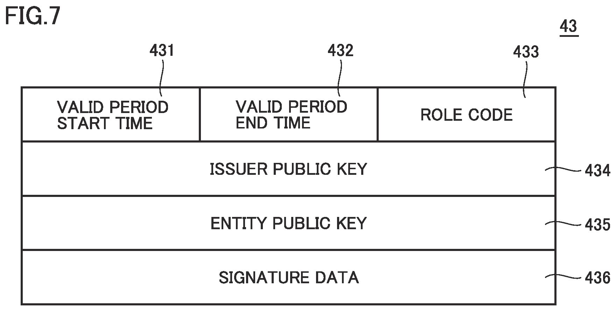

Fig. 7 is a schematic view illustrating an example of the data structure of the trust control section 42 (the trust authorization section 43) of the electronic currency 10 according to this embodiment. With reference to Fig. 7, the trust authorization section 43 includes a valid period start time 431, a valid period end time 432, a role code 433, an issuer public key 434, an entity public key 435, and signature data 436.

The valid period start time 431 is the same value as the creation time included in the initial data 41. It is necessary that a processing time included in the checkpoint data of the electronic currency 10 is after (on or after) the valid period start time 431. That is, in a case where the processing time is earlier than the valid period start time 431, the processing is considered as an invalid procedure or processing.

The valid period end time 432 is the same value as the expiration date included in the initial data 41. It is necessary that the processing time included in the checkpoint data of the electronic currency 10 is before (on or before) the valid period end time 432. That is, in a case where the processing time is later than the valid period start time 431, the processing is considered as an invalid procedure or processing.

The role code 433 includes information indicating which corresponds to which link of the trust chain illustrated in Fig. **6****.** For example, the role code 433 includes information indicating that the local issuing authority 51 that functions as the first intermediate entity is the trust with respect to the central bank 3 that functions as the root.

The issuer public key 434 is the public key of the central bank 3 that functions as the root. The entity public key 435 is a public key of an entity indicating trust. The entity indicating the trust is an entity belonging to any of the first intermediate entity, the second intermediate entity, and the user.

The signature data 436 is generated from the information included in the trust authorization section 43 (the valid period start time 431, the valid period end time 432, the role code 433, the issuer public key 434, and the entity public key 435) by using a private key to be paired with the entity public key 435. That is, a hash value calculated by inputting the information included in the trust authorization section 43 (excluding the signature data 436) to a hash function is encrypted by the private key to be paired with the entity public key 435, and thus, the signature data 436 is generated.

By referring to the information of the trust authorization section 43, it is possible for a third person to check and validate the trust chain linked to the central bank 3 that functions as the root. The trust authorization section 43 is generated for each link configuring the trust chain illustrated in Fig. **6****.** It is preferable to generate the trust authorization section 43 for all the links configuring the trust chain illustrated in Fig. **6****,** but the trust authorization section 43 may be generated only for a part of the links.

However, as described below, the public key registered in the trust control section 42 is requested for the circulation of the electronic currency 10.

### (e3: Transaction Control Section 44)

The transaction control section 44 includes the transaction data 45 that is the information of exchange between an entity transferring the electronic currency 10 and an entity receiving the electronic currency 10. The transaction data 45, for example, indicates the transfer history of the electronic currency 10 from one entity to another entity.

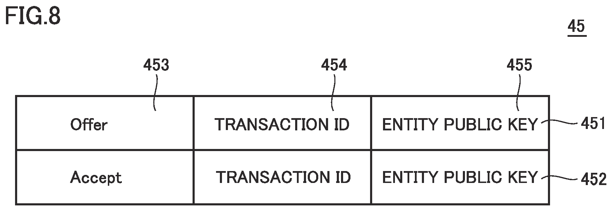

Fig. 8 is a schematic view illustrating an example of the data structure of the transaction data 45 in the transaction control section 44 of the electronic currency 10 according to this embodiment. With reference to Fig. 8, the transaction data 45 includes an Offer entry 451 and an Accept entry 452. As described below, The Offer entry 451 and the Accept entry 452 may be added by different entities at different timings.

The Offer entry 451 includes a type 453 of "Offer", a transaction ID 454, and an entity public key 455. The Accept entry 452 includes a type 453 of "Accept", the transaction ID 454, and the entity public key 455.

The Offer entry 451 is added by an entity possessing the electronic currency 10 when the entity possessing the electronic currency 10 offers the transfer of the electronic currency 10 to another entity. Therefore, the entity public key 455 is a public key of the entity possessing the electronic currency 10.

The Accept entry 452 is added by an entity receiving the electronic currency 10 when the offer of the transfer of the electronic currency 10 is accepted. Therefore, the entity public key 455 is a public key of the entity receiving the electronic currency 10.

The transaction data 45 illustrated in Fig. 8 may be added to the transaction control section 44 for each transfer of the electronic currency 10.

The transaction control section 44 may include information for providing a known public key to the electronic currency 10 and information for accepting the electronic currency 10 in a new public key. For example, in a case where an expiration date of a key pair (public keys) of any entities is expired, a new key pair (public keys) is issued. In the transaction control section 44, information for updating the key pair (the public keys) may be stored.

### (e4: Special Section 46)

The special section 46 includes an invalid management section 47 and checkpoint data 48.

In the invalid management section 47, a determination result of whether the expiration date of the electronic currency 10 is not expired is stored. In a case where the expiration date of the electronic currency 10 is expired, it is not possible to further circulate the electronic currency 10, and the electronic currency is only allowed to return to the central bank 3.

In the checkpoint data 48, the checkpoint data is sequentially stored. The signed checkpoint data indicates each point of the circulation route of the electronic currency 10. That is, the checkpoint data 48 is signed after a successful transfer of the electronic currency 10.

The checkpoint data stored in the checkpoint data 48 is discarded unless the following requisites are satisfied.
(1) a signer public key is registered in the transaction control section 44
(2) a processing time 481 of newly generated checkpoint data 48 is later than a processing time 481 of generated checkpoint data 48
(3) the processing time 481 of the newly generated checkpoint data 48 has not passed the valid period end time 432
(4) the processing time 481 of the newly generated checkpoint data 48 is earlier than the current time at which processing of performing a set of validation including (1) to (3) is executed

The requisites of (1) to (4) described above may be evaluated by the entity receiving the electronic currency 10, or may be evaluated in the ledger 8.

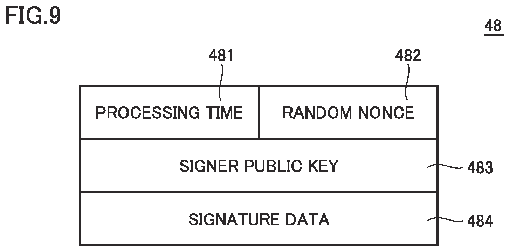

Fig. 9 is a schematic view illustrating an example of the data structure of the checkpoint data 48 in the special section 46 of the electronic currency 10 according to this embodiment. With reference to Fig. 9, the checkpoint data 48 includes the processing time 481, random nonce 482, a signer public key 483, and signature data 484.

The processing time 481 is a time at which the checkpoint data 48 is generated. The random nonce 482 is used to improve security intensity in combination with the processing time 481.

In the signer public key 483, a public key of an entity transferring the electronic currency 10 (a source entity) is stored.

The signature data 484 is generated from information (the processing time 481, the random nonce 482, and the signer public key 483) included in the checkpoint data 48 by using a private key to be paired with the signer public key 483. That is, a hash value calculated by inputting the information included in the signature data 484 (excluding the signature data 484) to a hash function is encrypted by the private key to be paired with the signer public key 483, and thus, the signature data 484 is generated.

The checkpoint data 48 is generated each time when the electronic currency 10 is circulated between the entities.

### (e5: File Name of Electronic Currency 10)

The file name of the electronic currency 10, for example, may include a string in which a currency code, a value (expressed as an integral multiple of the minimum unit), and a serial number are connected, and a file extension (for example, "snote").

For example, the file name of the electronic currency 10 indicating the value of 10,000 yen in Japanese yen can be set as "JPY-10000-5891b5b522d5df086d0ff0b110fbd9d21bb4fc7163af34d08286a2e846f 6be03.snote". In addition, the file name of the electronic currency 10 indicating the value of 100.00 dollars in U.S. dollar can be set as "USD-10000-48ae15fd45c3ae607e41a72d153d6c051f267c42f5ea11f26e1b33b183e af0e8.snote". In this case, since the minimum unit of U.S. dollar is cent, the value is expressed as an integral multiple of cent.

### <F. Ledger 8>

Next, the ledger 8 included in the electronic currency base 1 according to this embodiment will be described.

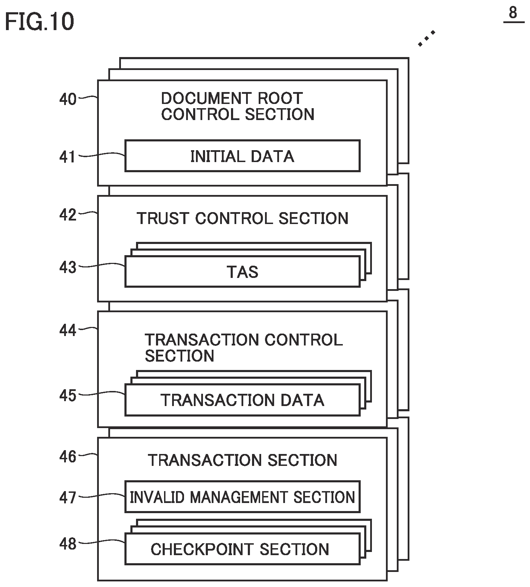

Fig. 10 is a schematic view illustrating an example of the data structure of the ledger 8 in the electronic currency base 1 according to this embodiment. With reference to Fig. 10, the contents of the electronic currency 10 provided to the financial market by the central bank 3 are sequentially reflected on the ledger 8.

The ledger 8 records the contents of the document root control section 40, the trust control section 42, the transaction control section 44, and the special section 46, which are included in each of the electronic currencies 10.

An entity disposed in the network enabled zone 60, when receiving the electronic currency 10 from another entity, records the contents of the received electronic currency 10 in the ledger 8.

The ledger 8 may include an engine for validating a value stored in the invalid management section 47 included in the special section 46 of the electronic currency 10 (the determination result of whether the expiration date of the electronic currency 10 is not expired), and an engine for validating the compliance of the checkpoint data 48 included in the special section 46 of the electronic currency 10. Such engines may execute validation processing at a timing at which data is newly written in the ledger 8.

A processing example of validating the compliance of the checkpoint data 48 will be described below.

### <G. Processing Procedure>

Next, an example of a processing procedure in the electronic currency base 1 according to this embodiment will be described.

### (g1: Transfer of Electronic Currency 10 between Entities)

First, the transfer of the electronic currency 10 between the entities will be described.

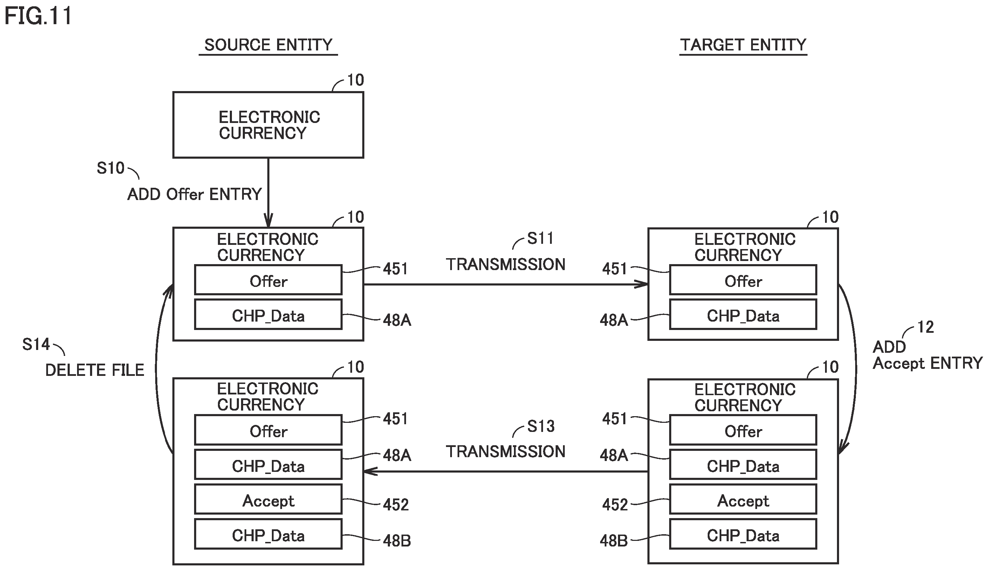

Fig. 11 is a diagram for illustrating a basic processing procedure example of the transfer of the electronic currency 10 between the entities in the electronic currency base 1 according to this embodiment. In Fig. 11, an example is illustrated in which the possession of the electronic currency 10 is changed from one entity (hereinafter, also referred to as a "source entity") to another entity (hereinafter, also referred to as a "target entity").

With reference to Fig. 11, the source entity adds the Offer entry 451 (the transaction data 45) to the electronic currency 10 to be transferred to the target entity, and adds checkpoint data 48A including signature data generated by using a private key of the source entity (step S10). The source entity transmits the electronic currency 10 to which the Offer entry 451 and the checkpoint data 48A are added to the target entity (step S11).

In a case where the transfer of the electronic currency 10 received from the source entity is accepted, the target entity adds the Accept entry 452 (the transaction data 45) to the received electronic currency 10, and adds checkpoint data 48B including signature data generated by using a private key of the target entity (step S12). The target entity transmits the electronic currency 10 to which the Accept entry 452 and the checkpoint data 48B are added to the source entity (step S13).

In a case where the electronic currency 10 including the Accept entry 452 and the checkpoint data 48B is received, the source entity deletes the file of the electronic currency 10 stored in the source entity and the file of the electronic currency 10 received from the target entity (step S14).

As described above, in a case where the electronic currency 10 (the electronic file) is transmitted to the target entity (the second entity) from the source entity (the first entity), and then, the electronic currency 10 to which the checkpoint data 48B (the signature data) generated by using the private key of the target entity is added is received from the target entity, the source entity deletes the electronic currency 10 stored in the source entity.

According to such processing as described above, the transfer of the electronic currency 10 to the target entity from the source entity is completed.

In a case where the electronic currency 10 is used as a compensation for purchasing a product and a service, there may not be the electronic currency 10 of the same amount as the compensation to be paid. That is, exchange also including change may be required between the entities. In such a case, processing of adjusting in advance which combination of the electronic currency 10 is used to complete the transaction is executed between the entities. Hereinafter, such adjustment processing will be also referred to as "planning". In the planning, the plurality of electronic currencies 10 transferred between the entities are determined. In addition, since it is necessary to complete the transfer of all the plurality of electronic currencies 10, the transaction ID for managing a set of transfers is generated.

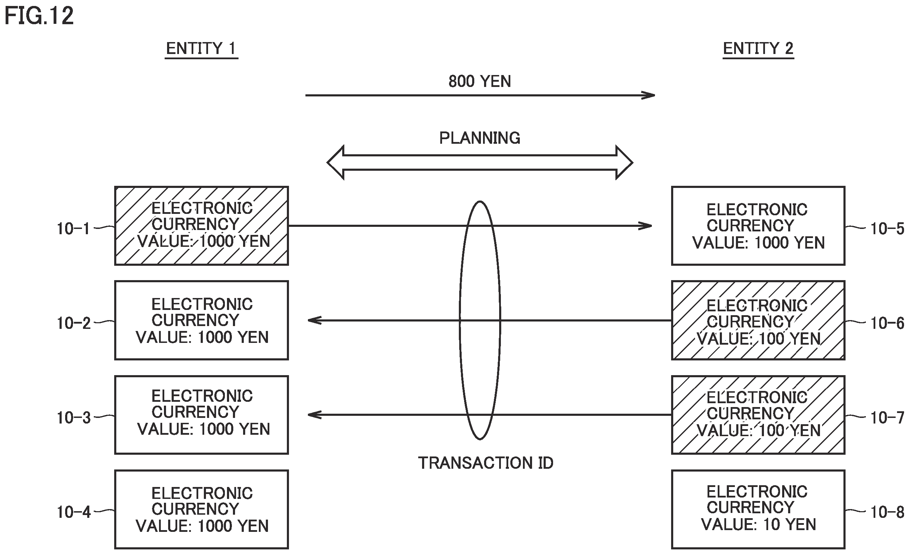

Fig. 12 is a diagram for illustrating a basic processing procedure example of the transfer of the electronic currency 10 including the planning in the electronic currency base 1 according to this embodiment. With reference to Fig. 12, as an example, a case will be assumed in which an entity 1 pays ¥800 to an entity 2. However, the entity 1 does not possess the electronic currency 10 of the same amount as ¥800. Therefore, the entity 1 and the entity 2 perform the planning.

As a result of the planning, it is determined that the entity 1 transfers an electronic currency 10-1 having the value of ¥1,000 to the entity 2, and the entity 2 transfers the electronic currencies 10-6 and 10-7 each having the value of ¥100 to the entity 1.

The transfer of the electronic currencies 10-1, 10-6, and 10-7 is associated with the same transaction ID.

For the electronic currency 10-1, the entity 1 is the source entity, and the processing illustrated in Fig. 11 is executed. On the other hand, for the electronic currencies 10-6 and 10-7, the entity 2 is the source entity, and the processing illustrated in Fig. 11 is respectively executed.

In the transaction data 45 (Fig. 8) added to each of the electronic currencies 10-1, 10-6, and 10-7, a common transaction ID is set.

By associating the transfer of the plurality of electronic currencies 10 with the common transaction ID, it is possible to reliably complete the transfer of the electronic currency 10 even in a case where the transaction requires change.

The transaction ID may be determined by any entity at each time. Alternatively, the serial numbers of one or a plurality of electronic currencies 10 to be a target may be sorted in an order set in advance, the sorted result may be connected, and a hash value calculated from the connected result may be determined as the transaction ID.

The transaction ID determined by the latter method can also be validated on the basis of the contents recorded in the ledger 8. For example, one or a plurality of electronic currencies 10 involved in one transaction are extracted from the ledger 8, and then, the transaction ID is calculated on the basis of the serial number of one or a plurality of extracted electronic currencies 10, and then, it is possible to evaluate whether the calculated transaction ID is coincident with the transaction ID recorded in the ledger 8. According to such evaluation of the transaction ID, it is possible to determine the presence or absence of the unauthorized transfer of the electronic currency 10.

In the planning, it is also validated that the expiration date of the electronic currency 10 to be the target is not expired. The electronic currency 10 of which the expiration date is expired is excluded from the planning target. That is, at least one of the source entity and the target entity validates that the expiration date of the electronic currency 10 is not expired, before the electronic currency 10 (the electronic file) is transferred to the target entity (the second entity) from the source entity (the first entity). According to such validation, it is possible to prevent the electronic currency 10 that is not capable of being circulated in the financial market from being selected as a transfer target.

### (g2: Circulation of Electronic Currency 10 in Network enabled Zone 60)

Next, the circulation of the electronic currency 10 provided to the financial market by the central bank 3 will be described.

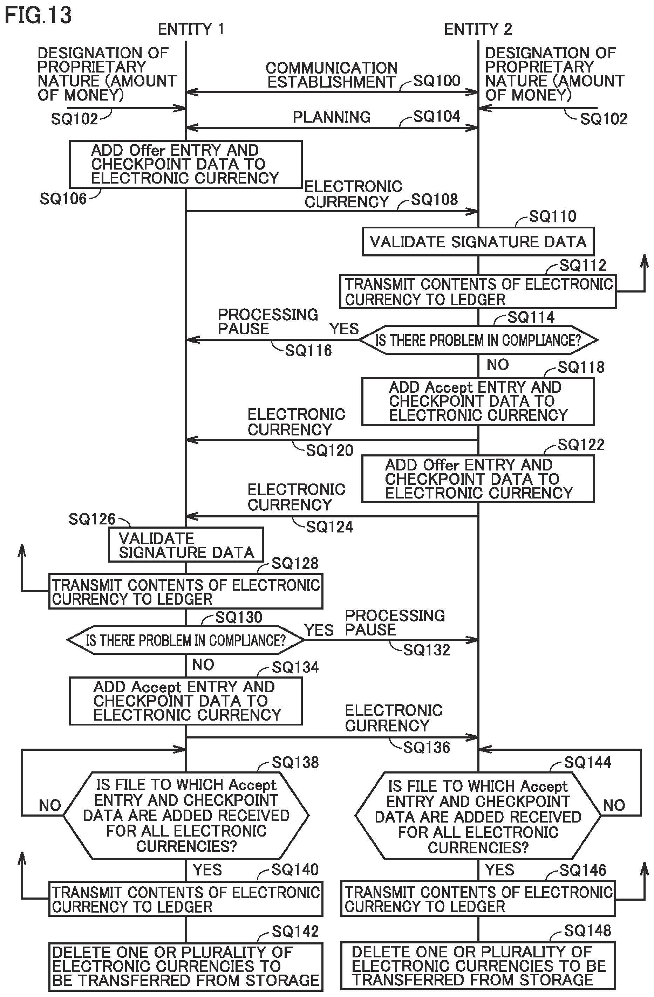

Fig. 13 is a sequence diagram illustrating the processing procedure of the circulation of the electronic currency 10 in the electronic currency base 1 according to this embodiment. Fig. 13 illustrates a processing example of transferring the proprietary nature to the entity 2 from the entity 1.

Typically, the entity 1 is the source entity, and the entity 2 is the target entity. In the processing example illustrated in Fig. 13, the entity 1 and the entity 2 exist in the network enabled zone 60.

With reference to Fig. 13, first, communication is established between the entity 1 and the entity 2 (sequence SQ100).

In a case where at least one of the entity 1 and the entity 2 receives the designation of the proprietary nature (the amount of money) to be transferred (sequence SQ102), the entity 1 and the entity 2 determine the transaction ID and one or a plurality of electronic currencies 10 that are the transfer target by the planning (sequence SQ104). In the planning, the entity 1 and the entity 2 also validate that the expiration date of the electronic currency 10 to be the target is not expired.

The entity 1 adds the Offer entry 451 and the checkpoint data 48 to each of one or a plurality of electronic currencies 10 that are the transfer target to the entity 2 (sequence SQ106). The entity 1 transmits one or a plurality of electronic currencies 10 to which the Offer entry 451 and the checkpoint data 48 are added to the entity 2 (sequence SQ108).

The entity 2 validates the signature data included in the checkpoint data 48 of one or a plurality of received electronic currencies 10 by using a public key of the entity 1 (sequence SQ110). In a case where there is no problem in the validation of the signature data, the entity 2 transmits the contents of one or a plurality of received electronic currencies 10 to the ledger 8 (sequence SQ112). The entity 2 receives the electronic currency 10 (the electronic file) from the entity 1, and then, compares the contents of the electronic currency 10 with the contents recorded in the ledger 8.

In a case where a notification that there is a problem in the compliance for the contents of one or a plurality of transmitted electronic currencies 10 is received from the ledger 8 (YES in sequence SQ114), the entity 2 notifies the entity 1 of the pause of the processing (sequence SQ116).

In a case where the notification that there is a problem in the compliance for the contents of one or a plurality of transmitted electronic currencies 10 is not received from the ledger 8 (NO in sequence SQ114), the entity 2 adds the Accept entry 452 and the checkpoint data 48 to each of one or a plurality of received electronic currencies 10 (sequence SQ118). The entity 2 transmits one or a plurality of electronic currencies 10 to which the Accept entry 452 and the checkpoint data 48 are added to the entity 1 (sequence SQ120).

In a case where it is necessary to transfer one or a plurality of electronic currencies 10 to the entity 1 from the entity 2 as change, the processing of sequences SQ122 to SQ136 is also executed.

The entity 2 adds the Offer entry 451 and the checkpoint data 48 to each of one or a plurality of electronic currencies 10 that are the transfer target to the entity 1 (sequence SQ122). The entity 1 transmits one or a plurality of electronic currencies 10 to which the Offer entry 451 and the checkpoint data 48 are added to the entity 1 (sequence SQ124).

The entity 1 validates the signature data included in the checkpoint data 48 of one or a plurality of received electronic currencies 10 by using a public key of the entity 2 (sequence SQ126). In a case where there is no problem in the validation of the signature data, the entity 1 transmits the contents of one or a plurality of received electronic currencies 10 to the ledger 8 (sequence SQ128). The entity 1 receives the electronic currency 10 (the electronic file) from the entity 2, and then, compares the contents of the electronic currency 10 with the contents recorded in the ledger 8.

In a case where the notification that there is a problem in the compliance for the contents of one or a plurality of transmitted electronic currencies 10 is received from the ledger 8 (YES in sequence SQ130), the entity 1 notifies the entity 2 of the pause of the processing (sequence SQ132).

In a case where the notification that there is a problem in the compliance for the contents of one or a plurality of transmitted electronic currencies 10 is not received from the ledger 8 (NO in sequence SQ130), the entity 1 adds the Accept entry 452 and the checkpoint data 48 to each of one or a plurality of received electronic currencies 10 (sequence SQ134). The entity 1 transmits one or a plurality of electronic currencies 10 to which the Accept entry 452 and the checkpoint data 48 are added to the entity 2 (sequence SQ136).

In a case where a file to which the Accept entry 452 and the checkpoint data 48 are added is received for all of one or a plurality of electronic currencies 10 to be transferred, which are determined in the planning (YES in sequence SQ138), the entity 1 transmits the contents of one or a plurality of electronic currencies 10 to be transferred to the ledger 8 (sequence SQ140), and deletes one or a plurality of electronic currencies 10 to be transferred from the storage of the entity 1 (sequence SQ142).

Similarly, in a case where a file to which the Accept entry 452 and the checkpoint data 48 are added is received for all of one or a plurality of electronic currencies 10 to be transferred, which are determined in the planning (YES in sequence SQ144), the entity 2 transmits the contents of one or a plurality of electronic currencies 10 to be transferred to the ledger 8 (sequence SQ146), and deletes one or a plurality of electronic currencies 10 to be transferred from the storage of the entity 2 (sequence SQ148).

According to the processing as described above, the proprietary nature is transferred to the entity 2 from the entity 1. Note that, the entity 1 and the entity 2 may update the total amount of the electronic currency 10 after the transfer of the electronic currency 10, which is possessed by each of the entities.

### (g3: Circulation of Electronic Currency 10 in Out-Network Zone 62)

Next, the circulation of the electronic currency 10 provided to the financial market by the central bank 3 will be described.

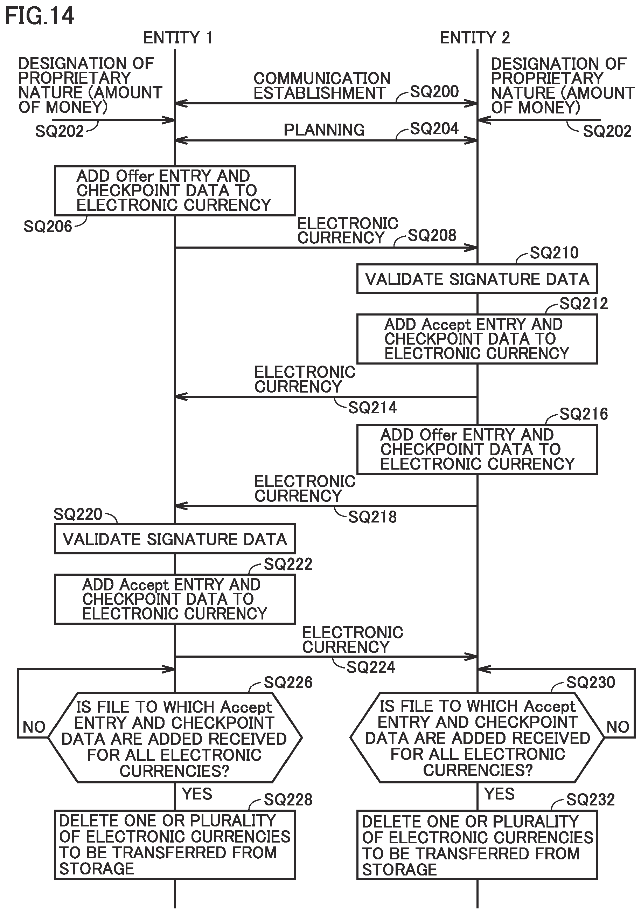

Fig. 14 is a sequence diagram illustrating another processing procedure of the circulation of the electronic currency 10 in the electronic currency base 1 according to this embodiment. Fig. 14 illustrates a processing example of transferring the proprietary nature to the entity 2 from the entity 1.

Typically, the entity 1 is the source entity, and the entity 2 is the target entity. In the processing example illustrated in Fig. 14, both of the entity 1 and the entity 2 exist in the out-network zone 62.

With reference to Fig. 14, first, communication is established between the entity 1 and the entity 2 (sequence SQ200).

In a case where at least one of the entity 1 and the entity 2 receives the designation of the proprietary nature (the amount of money) to be transferred (sequence SQ202), the entity 1 and the entity 2 determine the transaction ID and one or a plurality of electronic currencies 10 that are the transfer target by the planning (sequence SQ204). In the planning, the entity 1 and the entity 2 also validate that the expiration date of the electronic currency 10 to be the target is not expired.

The entity 1 adds Offer entry 451 and the checkpoint data 48 to each of one or a plurality of electronic currencies 10 that are the transfer target to the entity 2 (sequence SQ206). The entity 1 transmits one or a plurality of electronic currencies 10 to which the Offer entry 451 and the checkpoint data 48 are added to the entity 2 (sequence SQ208).

The entity 2 validates the signature data included in the checkpoint data 48 of one or a plurality of received electronic currencies 10 by using the public key of the entity 1 (sequence SQ210). In a case where there is no problem in the validation of the signature data, the entity 2 adds the Accept entry 452 and the checkpoint data 48 to each of one or a plurality of received electronic currencies 10 (sequence SQ212). The entity 2 transmits one or a plurality of electronic currencies 10 to which the Accept entry 452 and the checkpoint data 48 are added to the entity 1 (sequence SQ214).

In a case where it is necessary to transfer one or a plurality of electronic currencies 10 to the entity 1 from the entity 2 as change, the processing of sequences SQ216 to SQ224 is also executed.

The entity 2 adds the Offer entry 451 and the checkpoint data 48 to each of one or a plurality of electronic currencies 10 that are the transfer target to the entity 1 (sequence SQ216). The entity 1 transmits one or a plurality of electronic currencies 10 to which the Offer entry 451 and the checkpoint data 48 are added to the entity 1 (sequence SQ218).

The entity 1 validates the signature data included in the checkpoint data 48 of one or a plurality of received electronic currencies 10 by using the public key of the entity 2 (sequence SQ220). The entity 1 adds the Accept entry 452 and the checkpoint data 48 to each of one or a plurality of received electronic currencies 10 (sequence SQ222). The entity 1 transmits one or a plurality of electronic currencies 10 to which the Accept entry 452 and the checkpoint data 48 are added to the entity 2 (sequence SQ224).

In a case where a file to which the Accept entry 452 and the checkpoint data 48 are added is received for all of one or a plurality of electronic currencies 10 to be transferred, which are determined in the planning (YES in sequence SQ226), the entity 1 deletes one or a plurality of electronic currencies 10 to be transferred from the storage of the entity 1 (sequence SQ228).

Similarly, in a case where a file to which the Accept entry 452 and the checkpoint data 48 are added is received for all of one or a plurality of electronic currencies 10 to be transferred, which are determined in the planning (YES in sequence SQ230), the entity 2 deletes one or a plurality of electronic currencies 10 to be transferred from the storage of the entity 2 (sequence SQ232).

According to the processing as described above, the proprietary nature is transferred to the entity 2 from the entity 1. Note that, the entity 1 and the entity 2 may update the total amount of the electronic currency 10 after the transfer of the electronic currency 10, which is possessed by each of the entities.

### (g4: Processing Procedure in Ledger 8)

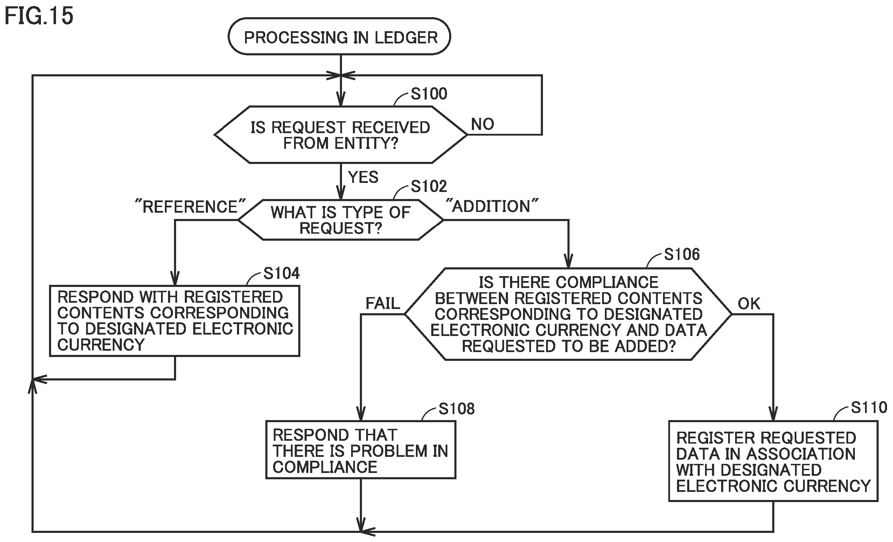

Fig. 15 is a flowchart illustrating an example of the processing procedure in the ledger 8 of the electronic currency base 1 according to this embodiment.

With reference to Fig. 15, in a case where a request is received from the entity (YES in step S100), the ledger 8 determines the type of request (step S102).

In the case of a request for referring to the ledger 8 ("Reference" in step S102), the ledger 8 responds with registered contents corresponding to the electronic currency 10 designated by the consecutive identifier or the like included in the initial data 41 (step S104). Then, the processing after step S100 is repeated.

In the case of a request for adding data to the ledger 8 ("Addition" in step S102), the ledger 8 validates the compliance between the registered contents corresponding to the electronic currency 10 designated by the consecutive identifier or the like included in the initial data 41 and the data requested to be added (step S106). In a case where there is a problem in the compliance (FAIL in step S106), the ledger 8 responds that there is a problem in the compliance (step S108). Then, the processing after step S100 is repeated.

In a case where there is no problem in the compliance (OK in step S106), the ledger 8 registers the requested data in association with the designated electronic currency 10 (step S110). Then, the processing after step S100 is repeated.

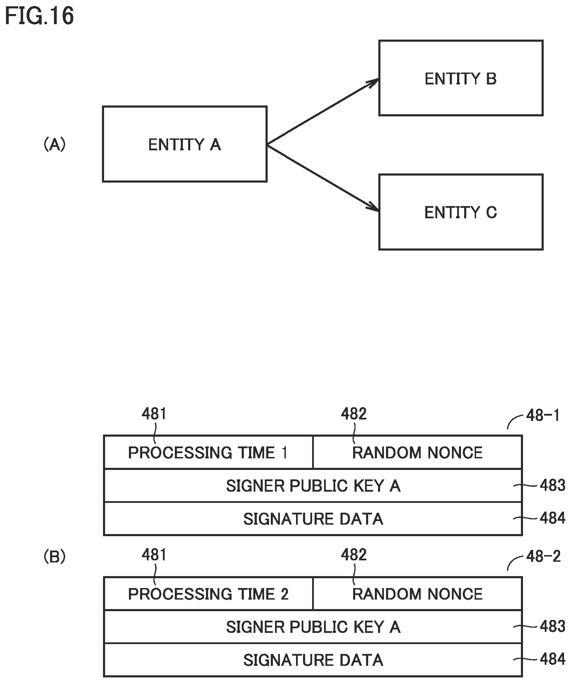

Fig. 16 is a diagram for illustrating an example of the compliance validation in the ledger 8 of the electronic currency base 1 according to this embodiment. Fig. 16 illustrates an example of the double assignment of the electronic currency 10.

With reference to Fig. 16(A), a case will be assumed in which an entity A transfers the same electronic currency 10 to each of an entity B and an entity C.

As illustrated in Fig. 16(B), in such a case, checkpoint data 48-1 indicating the transfer of the electronic currency 10 to the entity B from the entity A and checkpoint data 48-2 indicating the transfer of the electronic currency 10 to the entity C from the entity A are generated in the electronic currency 10.

In a case where the checkpoint data 48 is sorted on the basis of the processing time 481, a signer public key 483 of the checkpoint data 48-1 is the same as a signer public key 483 of the checkpoint data 48-2. On the basis of the value of such a signer public key 483, the occurrence of the double assignment of the electronic currency 10, or the like can be detected. In addition, a possessor of the same public key can be specified as a person who has performed the double assignment.

That is, processing of determining the presence or absence of the unauthorized transfer of the electronic currency 10 includes processing of determining whether there is a record (the checkpoint data 48) that the electronic currency 10 is transferred to each of a plurality of entities from one entity in association with the electronic currency 10.

As described above, the ledger 8 or the other entity validates the compliance of the checkpoint data 48 on the basis of a plurality of checkpoint data pieces registered in the same electronic currency 10.

### (g5: Expiration Date of Electronic Currency 10)

In the electronic currency base 1 according to this embodiment, the expiration date is set in the electronic currency 10. The central bank 3 (or the issuing authority 2) may issue a new electronic currency 10 corresponding to the electronic currency 10 of which the expiration date is expired.

The new electronic currency 10 may be issued at a timing at which the electronic currency 10 of which the expiration date is expired is received, or may be issued independently from the timing. For example, in a case where the electronic currency 10 of which the expiration date is expired is received, among the electronic currencies 10 (with a sufficient expiration date remaining) issued in advance, the corresponding amount of the electronic currency 10 may be selected and provided.

Note that, the amount of the newly provided electronic currency 10 may not be the same as the amount of the electronic currency 10 of which the expiration date is expired. For example, some taxes may be deducted in advance. In this case, the amount of the newly provided electronic currency 10 is the amount of money obtained by deducting a predetermined amount of tax from the amount of the electronic currency 10 of which the expiration date is expired. Alternatively, inflation, an interest rate, or the like may be reflected. In this case, the amount of the newly provided electronic currency 10 is greater than the amount of the electronic currency 10 of which the expiration date is expired.

As described above, the central bank 3 (or the issuing authority 2) is also capable of managing the total amount of currency circulated in the financial market, or the like.

### <H. Use of Checkpoint Data in Electronic Currency Base 1>

In the electronic currency base 1 according to this embodiment, it is possible to completely trace the circulation of each of the electronic currencies 10. Therefore, for example, it is possible to prevent the occurrence of a criminal act or an illegal act such as money laundering.

In addition, by statistically processing the circulation of the electronic currency 10, it is also possible to assume the state of economic activity in the financial market, and the like. Further, by anonymizing the entity involved in the circulation of the electronic currency 10, and then, generating statistical information, it is also possible to calculate an economic index and the like. In addition, it is also possible to provide the anonymized statistical information for a fee or for free.

As described above, in the electronic currency base 1 according to this embodiment, unlike the currency of the related art, it is possible to completely trace the circulation of the electronic currency 10, and thus, it is possible to perform economic analysis or the like with a higher accuracy.

For example, the central bank 3 constantly performs monitoring based on the ledger 8, and thus, in a case where the unauthorized transfer of the electronic currency 10 is detected, the unauthorized transfer may be immediately reported to a security organization (for example, the police or the like). In addition, the central bank 3 (or an institution delegated by the central bank 3) may generate and provide evidence for a trial (a criminal trial and/or a civil trial) on the basis of the registered contents of the ledger 8.

In addition, in order to prevent the money laundering or the like, information indicating a transfer purpose or the like may be added to the electronic currency 10. For example, a code according to International Standard Industrial Classification of All Economic Activities (ISIC) may be used. In a case where the electronic currency 10 is paid as a compensation for purchasing a product and a service, the user may add a code indicating the product or the service to the electronic currency 10. Alternatively, the entity receiving the electronic currency 10 may add a code indicating a target product or service to the electronic currency 10.

Note that, the code indicating the product or the service is not limited to ISIC described above, and any code system can be used. An internationally standardized code system may be used, or a code system applied to a specific country may be used.

By analyzing information in which the transaction ID is combined with the code indicating the product or the service (that is, usage), it is possible to assume the possibility of the money laundering, or the like. In addition, it is also possible to assume the possibility of terror, or the like on the basis of the code indicating the product or the service.

In addition, the central bank 3 (or the institution delegated by the central bank 3) may analyze the situation or the like of the product and the service on the basis of the registered contents of the ledger 8, and periodically output a report. Such a report is information valid for the analysis of an economic situation or an economic trend.

In addition, the central bank 3 (or the institution delegated by the central bank 3) or an institution corresponding to tax assessment and collection may perform the taxation of a tax according to the payment of the compensation according to the product and the service (for example, a value-added tax, a commodity tax, a consumption tax, or the like) on the basis of the ledger 8. In the electronic currency base according to this embodiment, it is possible to manage the entities that are a payment source and a payment destination of the compensation for the product and the service, and thus, it is possible to calculate the amount of tax that each of the entities is to pay. Further, the central bank 3 or the institution responsible for the assessment and collection may collect the calculated amount of tax at each time or for each institution. Tax may be collected by being debited from the bank account of each of the entities, or may be collected by requesting each of the entities for the payment of the calculated amount of electronic currency.

As described above, the electronic currency base according to this embodiment is capable of supporting at least various office procedures and various processing pieces by an administrative system.

### <I. Advantages>

According to the electronic currency base 1 according to this embodiment, at least a part of the entities is capable of determining the presence or absence of the unauthorized transfer of the electronic currency 10 on the basis of at least the contents recorded in the ledger 8. Unlike the virtual currency, by referring to the ledger 8 at any timing, it is possible to determine the presence or absence of the unauthorized transfer of the electronic currency 10, and thus, a number of resources such as a network are not consumed. On the other hand, since the presence or absence of the unauthorized transfer of the electronic currency 10 can be reliably determined, a safe circulation of currency can be attained.

The embodiment disclosed herein should be considered to be illustrative in all respects and not restrictive. It is intended that the scope of the invention is indicated by the claims but not the above description, and includes the meanings equivalent to the claims and all changes within the claims.

### EXPLANATIONS OF LETTERS OR NUMERALS

1 ELECTRONIC CURRENCY BASE
2 ISSUING AUTHORITY, 3 CENTRAL BANK, 4 BANKING INSTITUTION, 5 SELLER, 6, 6A, 6B CONSUMER, 8 LEDGER, 10, 11, 12, 13, 14, 15, 16 ELECTRONIC CURRENCY, 22, 23, 24, 116, 216 KEY PAIR, 22A, 23A, 24A, 25A, 26A, 26AA, 26AB PRIVATE KEY, 22B, 23B, 24B, 25B PUBLIC KEY, 31, 32, 33, 34, 48, 48A, 48B CHECKPOINT DATA, 40 DOCUMENT ROOT CONTROL SECTION, 41 INITIAL DATA, 42 TRUST CONTROL SECTION, 43 TRUST AUTHORIZATION SECTION, 44 TRANSACTION CONTROL SECTION, 45 TRANSACTION DATA, 46 SPECIAL SECTION, 47 INVALID MANAGEMENT SECTION, 51 LOCAL ISSUING AUTHORITY, 52 STATE DEPARTMENT, 53 FINANCE MINISTRY, 54 NOTARY, 55 GOVERNMENT DEPARTMENT, 60 NETWORK ENABLED ZONE, 62 OUT-NETWORK ZONE, 100 INFORMATION PROCESSING DEVICE, 102, 202 PROCESSOR, 104, 204 MEMORY, 106, 206 INPUT UNIT, 108, 208 DISPLAY UNIT, 110, 210 STORAGE, 112, 212 OS, 114, 214 APPLICATION PROGRAM, 120 NETWORK INTERFACE, 200 MOBILE DEVICE, 220 CAMERA, 222 SPEAKER, 224 WIRELESS COMMUNICATION UNIT, 226 NEAR-FIELD COMMUNICATION UNIT, 431 VALID PERIOD START TIME, 432 VALID PERIOD END TIME, 433 ROLE CODE, 434 ISSUER PUBLIC KEY, 435, 455 ENTITY PUBLIC KEY, 436, 484 SIGNATURE DATA, 451 Offer ENTRY, 452 Accept ENTRY, 453 TYPE, 454 TRANSACTION ID, 481 PROCESSING TIME, 482 RANDOM NONCE, 483 SIGNER PUBLIC KEY.

## Claims

1. A method executed by a computer for attaining an electronic currency base, comprising:
a step of generating an electronic file to which a proprietary nature set in advance is imparted;
a step of adding first signature data generated by using a private key of a central bank to the electronic file;
a step of adding second signature data generated by using a private key of a first entity to the electronic file in order to transfer the electronic file to a second entity from the first entity after the first signature data is added;
a step of recording at least a part of contents of the electronic file in a ledger; and
a step of determining the presence or absence of an unauthorized transfer of the electronic file on the basis of at least the contents recorded in the ledger.

2. The method according to claim 1,
wherein the step of determining the presence or absence of the unauthorized transfer of the electronic file includes a step of determining whether there is a record that the electronic file is transferred to each of a plurality of entities from the first entity in association with the electronic file.

3. The method according to claim 1 or 2, further comprising
a step of deleting the electronic file in which the first entity is stored when receiving the electronic file to which third signature data generated by using a private key of the second entity is added from the second entity after the electronic file is transmitted to the second entity from the first entity.

4. The method according to any one of claims 1 to 3, further comprising
a step of the second entity validating the second signature data included in the electronic file by using the public key of the first entity.

5. The method according to any one of claims 1 to 4,
wherein the electronic file includes setting of an expiration date, and
the method further comprises a step of at least one of the first entity and the second entity validating that the expiration date of the electronic file is not expired before the electronic file is transferred to the second entity from the first entity.

6. The method according to any one of claims 1 to 5, further comprising
a step of comparing the contents of the electronic file with the contents recorded in the ledger, which is executed after the second entity receives the electronic file from the first entity.

7. The method according to any one of claims 1 to 6, further comprising
a step of the central bank collecting the electronic file when the expiration date of the electronic file is expired.

8. A system for attaining an electronic currency base, comprising:
a means for generating an electronic file to which a proprietary nature set in advance is imparted;
a means for adding first signature data generated by using a private key of a central bank to the electronic file;
a means for adding second signature data generated by using a private key of a first entity to the electronic file in order to transfer the electronic file to a second entity from the first entity after the first signature data is added;
a ledger for recording at least a part of contents of the electronic file; and
a means determining the presence or absence of an unauthorized transfer of the electronic file on the basis of at least the contents recorded in the ledger.
